# EUROPEAN PATENT SPECIFICATION

(11) **EP 4 333 415 B1**
(45) Date of publication and mention of the grant of the patent: **07.05.2025**
(21) Application number: 23163391.8
(22) Date of filing: 22.03.2023
(51) Int. Cl.: H04N 1/00, G06F 3/12, G03G 15/00, G06F 11/34, G06F 11/07, G06F 11/30

(54) **IMAGE FORMING APPARATUS, IMAGE FORMING PROGRAM, AND IMAGE FORMING METHOD**
BILDERZEUGUNGSVORRICHTUNG, BILDERZEUGUNGSPROGRAMM UND BILDERZEUGUNGSVERFAHREN
APPAREIL DE FORMATION D'IMAGE, PROGRAMME DE FORMATION D'IMAGE ET PROCÉDÉ DE FORMATION D'IMAGE

(30) Priority: 05.09.2022 JP 2022140604
(43) Date of publication of application: 06.03.2024
(73) Proprietor: FUJIFILM Business Innovation Corp., Minato-ku Tokyo (JP)
(72) Inventor: SAITO, Yusuke, Ebina-shi, Kanagawa (JP)
(74) Representative: Kurig, Thomas

(56) References cited:
- EP-A1- 2 169 937
- JP-A- 2017 103 534
- JP-B2- 6 336 377
- US-A1- 2011 099 272
- US-B1- 10 868 920

## Description

### BACKGROUND OF THE INVENTION

### (i) Field of the Invention

The present invention relates to an image forming apparatus, an image forming program, and an image forming method.

### (ii) Description of Related Art

JP2009-224958A discloses a task procedure estimation system including a history recording unit that records history records about processing that an image processing apparatus is instructed to perform, the history records including instructors who issue instructions to execute the processing, time information indicating times at which the processing is executed, contents of the processing, and target images that are targets of the processing, a classification unit that classifies the history records into categories of individual tasks on the basis of a comparison between the target images included in the history records recorded in the history recording unit, and an estimation unit that estimates a task procedure on the basis of an array of pairs of the instructors and contents of the processing indicated by the history records included in the categories classified by the classification unit.
JP 2017 103534 A discloses an image processing apparatus. When a trouble is detected, the time of the occurrence of the trouble is acquired, and the operation logs, trace logs, and history of jobs and/or components classified into groups while associated with trouble codes before and after the time of the occurrence of the trouble including the time are acquired. The acquired respective types of information are synchronized with each other on the basis of the times associated with the respective types of information and simultaneously reproduced and displayed on display means at a preset speed.

### SUMMARY OF THE INVENTION

The present invention is defined in the appended claims. The following disclosure serves a better understanding of the present invention. According to the present disclosure, in a case where a trouble occurs in image formation processing, an object of the present invention is to provide an image forming apparatus, an image forming program, and an image forming method capable of efficiently analyzing the trouble as compared with a case where operational log data is output as data for the trouble analysis without causing a user to check an operating procedure.

In order to achieve the above-mentioned object, according to a first aspect of the present disclosure, there is provided an image forming apparatus including a processor, in which the processor is configured to acquire operational log data about an operating procedure of a user who issues an instruction to perform image formation processing and display the operating procedure, in a case where a trouble occurs in the image formation processing and an instruction is issued to acquire the operational log data, cause the user to select whether or not the operating procedure is appropriate, and output data for trouble analysis according to a result of the selection of the user.

According to a second aspect of the present disclosure, there is provided the image forming apparatus according to the first aspect, in which the processor may be configured to receive the appropriate operating procedure selected by the user in a case where the selection of the user is that the operating procedure is inappropriate, and output the data for the trouble analysis including the received appropriate operating procedure.

According to a third aspect of the present disclosure, there is provided the image forming apparatus according to the first aspect, in which the processor may be configured to output the data for the trouble analysis including the operational log data in a case where the selection of the user is that the operating procedure is appropriate.

According to a fourth aspect of the present disclosure, there is provided the image forming apparatus according to any one of the first to third aspects, in which the processor may be configured to acquire the operational log data including the operating procedure performed in a specified period including at least a period from the occurrence of the trouble to the instruction to acquire the operational log data.

According to a fifth aspect of the present disclosure, there is provided the image forming apparatus according to any one of the first to fourth aspects, in which the processor may be configured to display a question for the trouble analysis, receive an answer to the question, and output the question and the received answer which are included in the data for the trouble analysis.

According to a sixth aspect of the present disclosure, there is provided the image forming apparatus according to the fifth aspect, in which the question may be a question about an operation performed by the user in a period before and after a time point at which the trouble occurs.

According to a seventh aspect of the present disclosure, there is provided the image forming apparatus according to any one of the first to sixth aspects, in which the data for the trouble analysis may include image formation log data about the image formation processing and control log data about control of the image forming apparatus.

According to an eighth aspect of the present disclosure, there is provided the image forming apparatus according to the seventh aspect, in which the processor may be configured to acquire the image formation log data about the image formation processing performed in a specified period including at least a period from the occurrence of the trouble to the instruction to acquire the operational log data, and the control log data about the control of the processor performed in the specified period.

According to a ninth aspect of the present disclosure, there is provided the image forming apparatus according to the eighth aspect, in which the processor may be configured to acquire the image formation log data and the control log data after acquiring the operational log data.

According to a tenth aspect of the present disclosure, there is provided an image forming program causing a computer to execute processing including acquiring operational log data about an operating procedure of a user who issues an instruction to perform image formation processing and display the operating procedure, in a case where a trouble occurs in the image formation processing and an instruction is issued to acquire the operational log data, causing the user to select whether or not the operating procedure is appropriate, and outputting data for trouble analysis according to a result of the selection of the user.

According to an eleventh aspect of the present disclosure, there is provided an image forming method including acquiring operational log data about an operating procedure of a user who issues an instruction to perform image formation processing and display the operating procedure, in a case where a trouble occurs in the image formation processing and an instruction is issued to acquire the operational log data, causing the user to select whether or not the operating procedure is appropriate, and outputting data for trouble analysis according to a result of the selection of the user.

According to the first aspect, the tenth aspect, and the eleventh aspect, there is an effect that it is possible to efficiently analyze the trouble, as compared with the case where the operational log data is output as data for the trouble analysis without causing the user to confirm the operating procedure, in a case where the trouble occurs in the image formation processing.

According to the second aspect, there is an effect that it is possible to efficiently analyze the trouble, as compared with the case where the appropriate operating procedure selected by the user is not received, in a case where the operating procedure on the basis of the operational log data is inappropriate.

According to the third aspect, there is an effect that it is not necessary to receive the appropriate operating procedure selected by the user.

According to the fourth aspect, there is an effect that the time necessary for acquiring the operational log data can be shortened, as compared with the case where the operational log data including the operating procedure performed in a period other than the period from occurrence of the trouble to the instruction to acquire the operational log data is also acquired.

According to the fifth aspect, there is an effect that the it is possible to efficiently analyze the trouble, as compared with the case where the answer to the question is not included in the data for the trouble analysis.

According to the sixth aspect, there is an effect that it is possible to efficiently analyze the trouble, as compared with the case where the question is a question about an operation performed by the user in a period other than the period before and after the time point at which the trouble occurs.

According to the seventh aspect, there is an effect that it is possible to efficiently analyze the trouble, as compared with the case where the data for the trouble analysis that does not include the image formation log data about the image formation processing and the control log data about the control of the image forming apparatus is output.

According to the eighth aspect, there is an effect that it is possible to efficiently analyze the trouble, as compared with the case where the image formation log data about the image formation processing performed in a period other than the period from occurrence of the trouble to the instruction to acquire the operational log data and the control log data about the control of the processor are acquired.

According to the ninth aspect, there is an effect that the operating procedure can be quickly created from the operational log data, as compared with the case where the operational log data is acquired after the image formation log data and the control log data are acquired.

### BRIEF DESCRIPTION OF THE DRAWINGS

Exemplary embodiment(s) of the present invention will be described in detail based on the following figures, wherein:
Fig. 1 is a diagram showing an outline of an image forming apparatus according to the present exemplary embodiment;
Fig. 2 is a block diagram showing an example of a configuration of the image forming apparatus;
Fig. 3 is a diagram showing an outline example of an image which is displayed on a display unit;
Fig. 4 is a flowchart showing a flow of processing of an image formation processing program;
Fig. 5 is a diagram showing details of operational log data which is acquired by the CPU;
Fig. 6 is an example of a pop-up image of a question which is displayed on the display unit;
Fig. 7 is another example of a pop-up image of a question which is displayed on the display unit;
Fig. 8 is another example of a pop-up image of a question which is displayed on the display unit;
Fig. 9 is a diagram showing an example of a pop-up image for confirming whether or not the operating procedure is appropriate; and
Fig. 10 is a diagram showing an example of a reception screen for receiving an appropriate operating procedure.

### DETAILED DESCRIPTION OF THE INVENTION

Hereinafter, an example of an exemplary embodiment of the present disclosure will be described with reference to the drawings.

First, an outline of the present exemplary embodiment will be described.

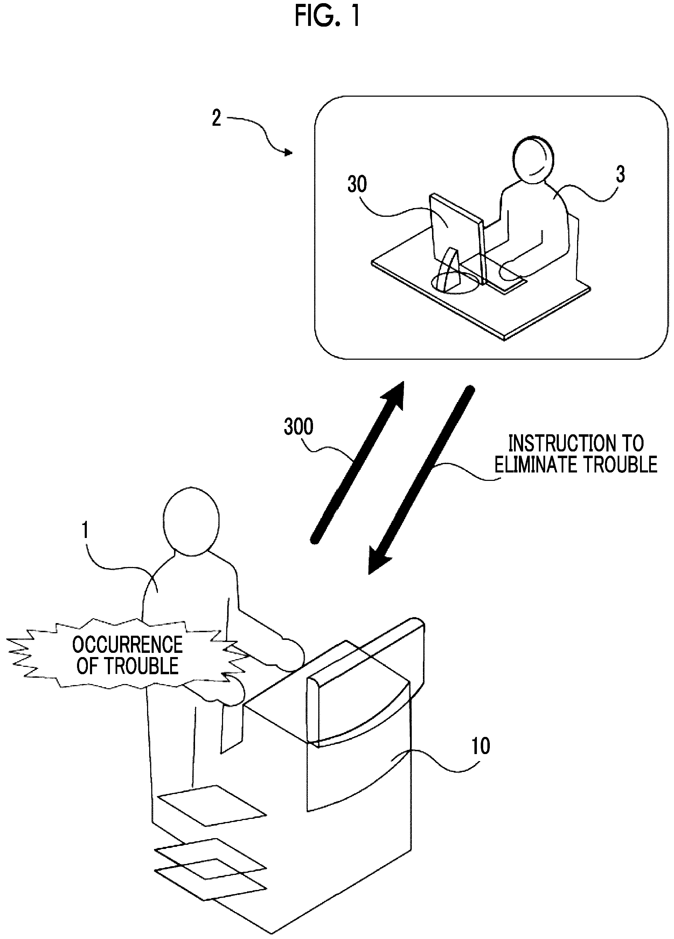

Fig. 1 is a diagram showing an outline of an image forming apparatus 10 according to the present exemplary embodiment. According to the example shown in Fig. 1, for example, in a case where a trouble occurs in an image forming apparatus 10 while a user 1 is using the image forming apparatus 10, the user 1 operates the image forming apparatus 10 to analyze the generated trouble, and issues an instruction to output analysis data 300 to be output to, for example, a PC 30 of a support window 2. A supporter 3 investigates a cause of the trouble in the image forming apparatus 10 from the received analysis data 300, a method of eliminating the trouble, and the like. After the investigation, the supporter 3 gives an instruction for the user 1, for example, to eliminate the trouble.

Examples of troubles that occur in the image forming apparatus 10 include a paper jam during image formation processing in which the image forming apparatus 10 forms an image on a recording medium, abnormal changes in a case of discharging a printed matter after the image formation processing, a trouble of at least one of the constituent parts of the image forming apparatus 10 shown below, and the like. Further, the analysis data 300 is an example of data for the trouble analysis. In addition, the details of the analysis data 300 will be described later.

Next, a configuration of the image forming apparatus 10 according to the present exemplary embodiment will be described.

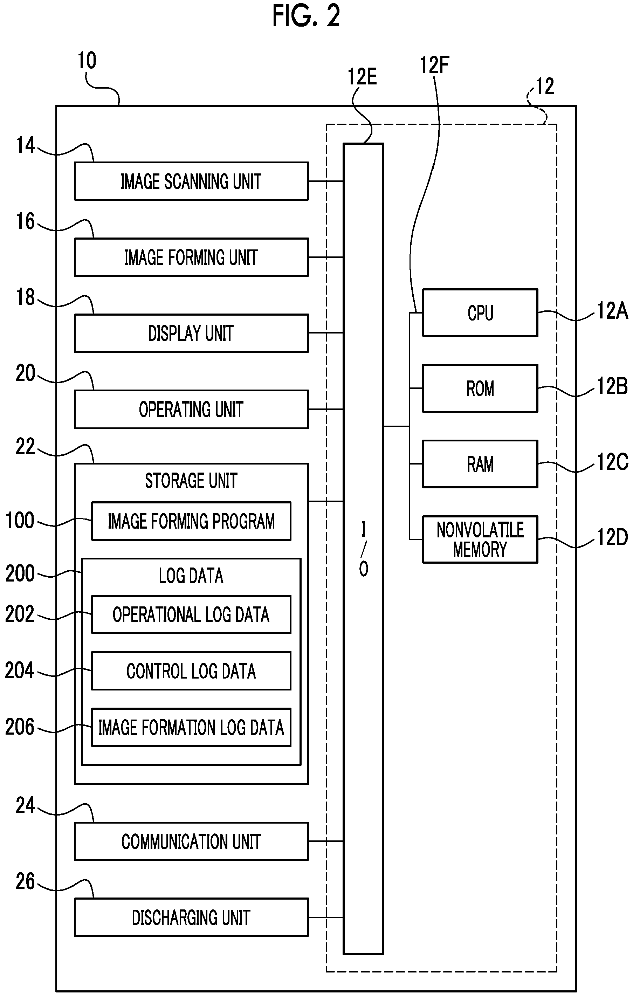

Fig. 2 is a block diagram showing an example of the configuration of the image forming apparatus 10. The image forming apparatus 10 shown in Fig. 2 includes constituent parts such as a control unit 12, an image scanning unit 14, an image forming unit 16, a display unit 18, an operating unit 20, a storage unit 22, a communication unit 24, and a discharging unit 26.

The control unit 12 controls each constituent part. The control unit 12 includes a central processing unit (CPU) 12A, a read-only memory (ROM) 12B, a random access memory (RAM) 12C, a nonvolatile memory 12D, and an input/output interface (I/O) unit 12E.

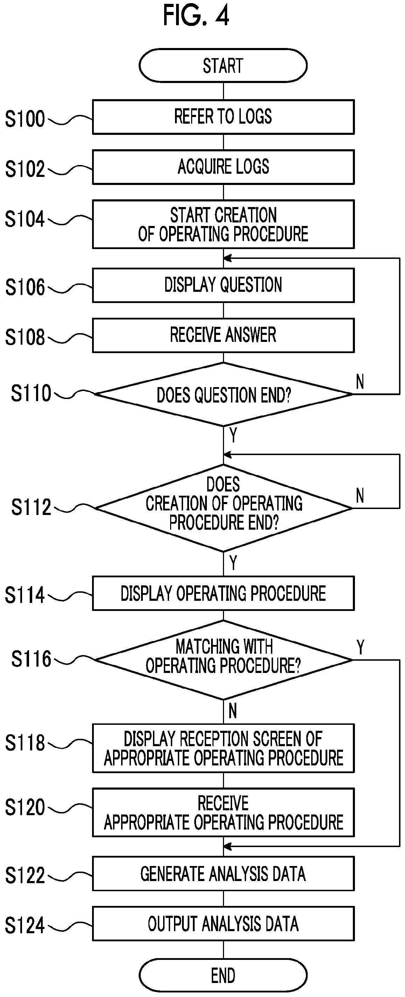

The CPU 12A is a central arithmetic processing unit and reads out image forming program 100 and various other programs from at least one of, for example, the ROM 12B, the nonvolatile memory 12D, or the storage unit 22. In addition, the details of the image forming program 100 will be described later (refer to Fig. 4). The CPU 12A controls the image forming apparatus 10 by executing the program which is read out with the RAM 12C set as a work area. It should be noted that the CPU 12A is an example of the processor.

The CPU 12A, the ROM 12B, the RAM 12C, and the nonvolatile memory 12D are connected to the I/O unit 12E via the bus 12F to be communicable with each other.

The image scanning unit 14 includes, for example, a charge-coupled device (CCD) image sensor or the like that reads a document which is set in the image forming apparatus 10 and that generates a document image.

The image forming unit 16 is configured to include, for example, a photoconductor, and executes image formation processing such as forming a document image which is generated by the image scanning unit 14 on a recording medium, for example, by using an electrophotographic method.

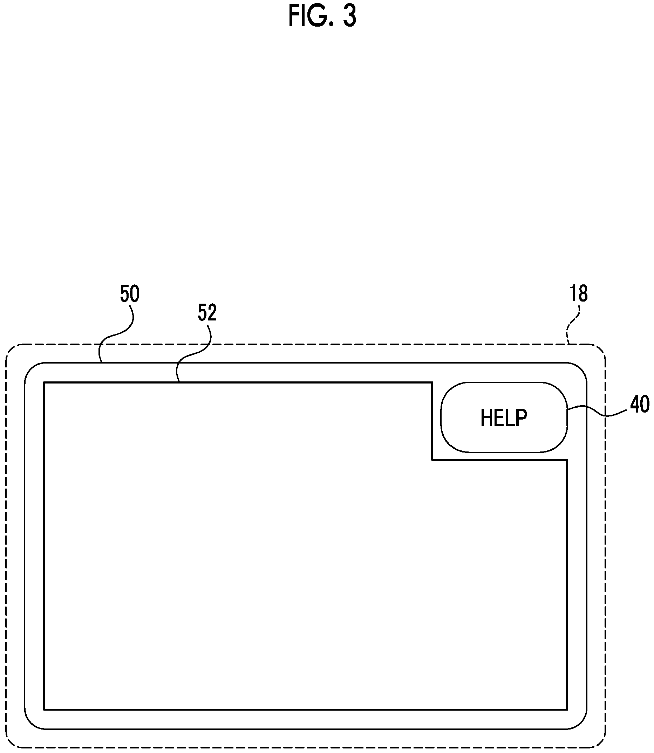

The display unit 18 is configured by combining, for example, a touch panel with a liquid crystal display, an organic EL display, and the like. An image, a pop-up image, or the like corresponding to a touch operation of a user 1, processing of the image forming apparatus 10, or the like is displayed on the display unit 18. Fig. 3 shows an outline of an image which is displayed on the display unit 18.

Fig. 3 is a diagram showing an example of the outline of the image which is displayed on the display unit 18. The image 50 shown in Fig. 3 includes a help button 40 and a region 52. In the region 52, waiting images, which are displayed in a case of waiting until an operation performed by the user 1 is performed or waiting until the image formation processing or the like ends, and images, which correspond to an operation of the user 1 and processing of the image forming apparatus 10, are displayed. Further, for example, the pop-up image or the like is displayed in the region 52. The pop-up image will be described in detail later. Further, by tapping the help button 40, execution of the image forming program 100 to be described below is started. The help button 40 is operated by the user 1, for example, in a case where a trouble occurs in the image forming apparatus 10. In a case where a trouble in the image forming apparatus 10 occurs during execution of the image formation processing according to an instruction of the user 1, the help button 40 is operated in a case where the image formation processing is performed while the image formation processing is being executed. The help button 40 may be provided on all the images displayed on the display unit 18 at all times such that the operation timing is not limited, or may be displayed in the image only in a case where the image forming apparatus 10 detects a trouble of the image forming apparatus 10.

The operating unit 20 is an operation button, a power button, or the like provided in the image forming apparatus 10.

The storage unit 22 is constituted of, for example, a solid state drive (SSD) or a hard disk drive (HDD). For example, the storage unit 22 stores the image forming program 100 and various programs. Further, the storage unit 22 stores, for example, operational log data 202, control log data 204, and image formation log data 206.

The operational log data 202 is log data, in which operations performed on the image forming apparatus 10 by the user 1 are recorded, such as operations received by the image forming apparatus 10, in other words, operations performed on the image forming apparatus 10 by the user 1, and dates and times on which the operations are performed on the image forming apparatus 10. The control log data 204 is log data, in which control of the image forming apparatus 10 is recorded, such as actions executed by the image forming apparatus 10, particularly the CPU 12A, and dates and times in a case where the image forming apparatus 10 executes the actions. The image formation log data 206 is log data, in which the image formation processing is recorded, such as actions in a case where the image forming apparatus 10 executes the image formation processing shown below, and dates and times in a case where the image forming apparatus 10 executes the image formation processing. Hereinafter, the operational log data 202, the control log data 204, and the image formation log data 206 are collectively referred to as log data 200.

The storage unit 22 is configured with, for example, a capacity that can store the log data 200 for a predetermined period. The predetermined period may be, for example, a period, in which the log data 200 in the processing of the image forming apparatus 10 which ends without occurrence of the trouble can be stored, before the time point at which the trouble occurs. For example, in a case where the period is set to one month, the storage unit 22 is configured with a capacity capable of storing the log data 200 for one month. In addition, in a case where the capacity of the storage unit 22 is insufficient, the log data 200, which has elapsed the predetermined period, is deleted with priority. In addition, the log data 200 deleted from the storage unit 22 may be output to and stored in an external storage device that is communicably connected to the image forming apparatus 10. The storage unit 22 is updated at any time in accordance with the operation of the image forming apparatus 10.

The communication unit 24 is an interface for communicating with an external device or the like, and for example, a communication interface such as local area network (LAN), Wi-Fi (registered trademark), or Bluetooth (registered trademark) is used. An example of an external device is the PC 30.

The printed matter discharged after the image formation processing ends is accumulated in the discharging unit 26.

The image scanning unit 14, the image forming unit 16, the display unit 18, the operating unit 20, the storage unit 22, the communication unit 24, and the discharging unit 26 are connected to the control unit 12 to be communicable with each other.

Next, the action performed by the image forming program 100 will be described. The image forming program 100 is executed by the CPU 12A, for example, in accordance with a tap operation on the help button 40.

Fig. 4 is a flowchart showing a flow of processing of the image forming program 100.

In step S100, the CPU 12A refers to the log data 200 which is stored in the storage unit 22. The log data 200 which is stored in the storage unit 22 is the log data 200 which is stored in the storage unit 22 at a time point at which execution of the image forming program 100 is started.

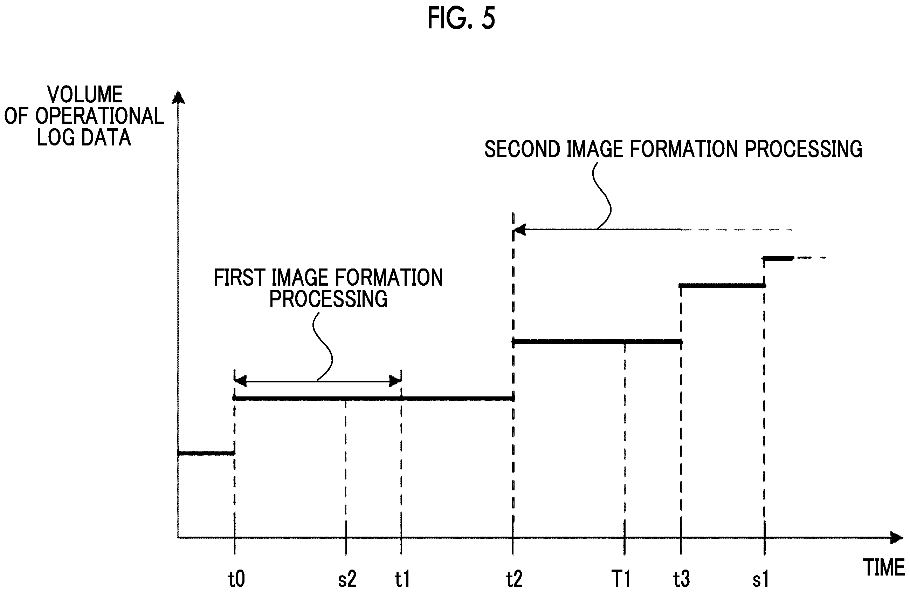

In step S102, the CPU 12A acquires a part of the operational log data 202 in the referenced log data 200 as operational log data 202'. Specifically, the storage unit 22 stores the previous operational log data 202 for the image forming apparatus 10 for at least a predetermined period, and the CPU 12A acquires, as the operational log data 202', a part of the stored operational log data 202. Details will be described with reference to Fig. 5.

Fig. 5 is a diagram showing details of the operational log data 202' which is acquired by the CPU 12A. Fig. 5 shows a graph showing a relationship between the volume of data of the operational log data 202 stored in the storage unit 22 and the elapsed time. A time t0 indicates a time at which the user 1 performs an operation of the image forming apparatus 10 to start first image formation processing. Since the operational log data 202 is updated in a case where the operation of the image forming apparatus 10 by the user 1 is performed, a volume of the operational log data 202 at the time t0 is increasing. A time t1 indicates a time at which the first image formation processing, which is started to be executed at the time t0, ends. According to the example shown in Fig. 5, since the user 1 does not perform the operation on the image forming apparatus 10 from the time t0 to the time t1, the volume of the operational log data 202 is constant.

A time t2 indicates a time at which the user 1 performs an operation of the image forming apparatus 10 to start the second image formation processing. It is assumed that a trouble occurs in the image forming apparatus 10 at a time T1 during which the second image formation processing is being executed. It is assumed that the user 1 performs an operation for stopping execution of second image formation processing at, for example, a time t3, and then operates the help button 40 at a time s1. The operation of the help button 40 corresponds to an instruction to acquire the operational log data. In step S102, the CPU 12A acquires the operational log data 202' such that the operational log data 202' include the operational log data 202 at the time T1 at which the trouble occurs. More specifically, for example, the operational log data 202 from a time s2, which is before time t1 and after the time t0 at which the first image formation processing in which a trouble does not occur ends, to the time s1, at which the help button 40 is operated, is acquired as the operational log data 202'. As described above, the operational log data 202' is acquired, which includes the operating procedure performed in a specified period (for example, a period from s2 to s1) including at least a period from occurrence of the trouble to the instruction to acquire the operational log data (for example, the period from T1 to s1).

In step S104, the CPU 12A starts creating the operating procedure 210. The operating procedure 210 is data created by the CPU 12A on the basis of the acquired operational log data 202', for example, a procedure of an operation on the image forming apparatus 10 by the user 1 in a period before and after the time point at which a trouble occurs in the image forming apparatus 10. In the example of Fig. 5, the operating procedure 210 is created from the operational log data 202' which indicates the operational log data 202 from the time s2 to the time s1. The CPU 12A executes the following steps S106 to S112 in parallel with the creation of the operating procedure 210.

In step S106, the CPU 12A displays a question on the display unit 18. The question is for the user 1 to confirm the operation performed by the user 1 on the image forming apparatus 10 in a period before and after a time point at which the trouble occurs.

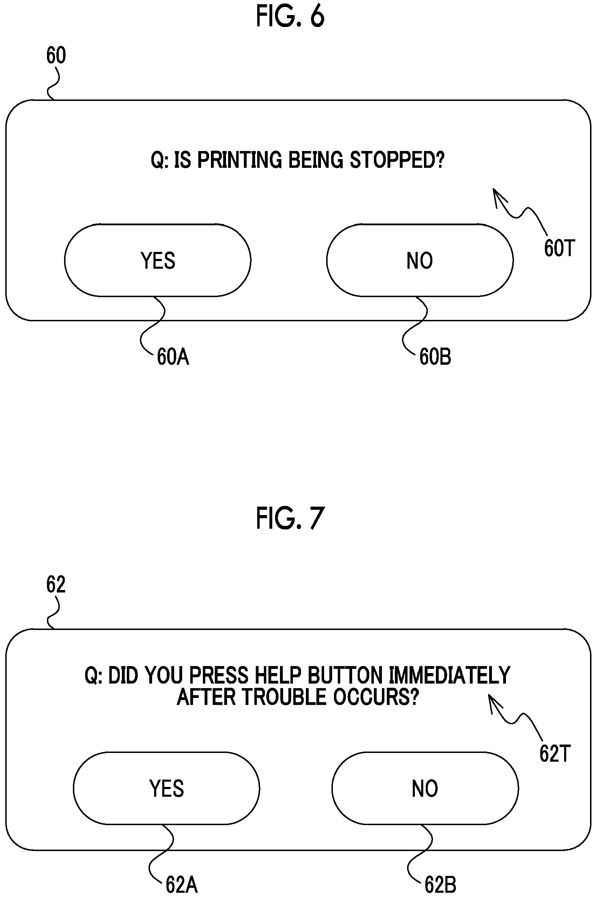

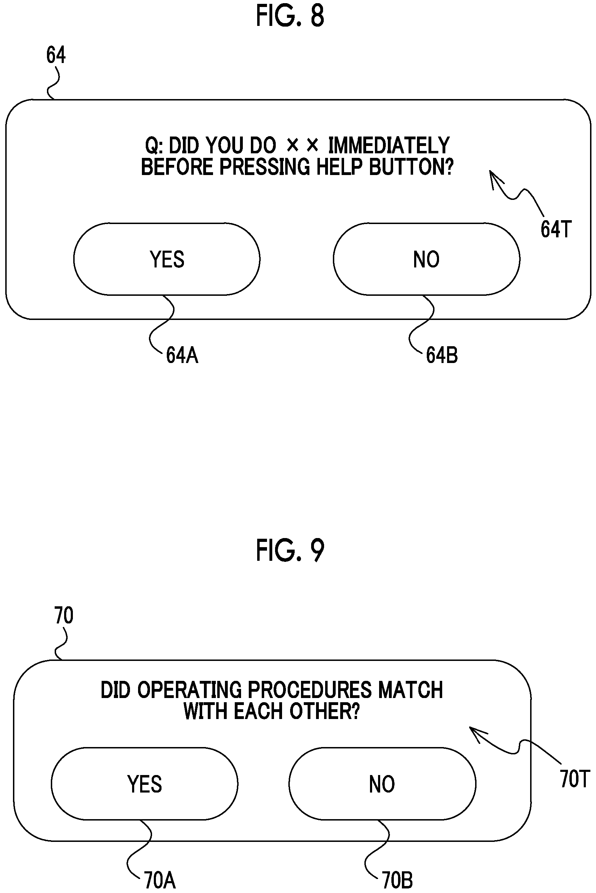

Fig. 6, Fig. 7, and Fig. 8 are examples of the pop-up images of questions displayed on the display unit 18 in step S106. The pop-up image 60 shown in Fig. 6 includes a text 60T which indicates a question "Q: is printing being stopped?", a button 60A, and a button 60B. The pop-up image 62 shown in Fig. 7 includes a text 62T which indicates a question "Q: did you press the help button immediately after a trouble occurs?", a button 62A, and a button 62B. The pop-up image 64 shown in Fig. 8 includes a text 64T which indicates a question "Q: did you do XX immediately before pressing the help button?", a button 64A, and a button 64B. For example, the question is stored in advance in the storage unit 22.

In step S108, the CPU 12A receives an answer to the question which is displayed on the display unit 18. The CPU 12A is able to receive, for example, an answer of either "yes" or "no" to the question. The received answer is stored in the storage unit 22 together with the question. The question and the answer to the question can be used for investigation of the supporter 3.

In step S110, the CPU 12A determines whether or not to end the display of the question and the reception of the answer. In a case where there is a question for which an answer has not yet been made, the CPU 12A makes the determination negative (N in step S110), and repeats the processing of steps S106 to S110. In a case where all the questions are displayed on the display unit 18 and answers to all the questions are received, the CPU 12A makes the determination affirmative (Y in step S110) and executes the processing of step S112.

In step S112, the CPU 12A determines whether or not the creation of the operating procedure 210 started in step S104 ends. In a case where the creation of the operating procedure 210 does not end, the CPU 12A makes the determination negative (N in step S112), and repeats the processing of step S112 until the creation ends. In a case where the creation of the operating procedure 210 ends, the CPU 12A makes the determination affirmative (Y in step S112) and executes the processing of step S114.

In step S114, on the basis of the created operating procedure 210, the CPU 12A displays, on the display unit 18, an animation or the like showing a flow of the operations for the image forming apparatus 10 of the user 1, and the pop-up image for confirming whether or not the indicated operating procedure is appropriate. Fig. 9 is a diagram showing an example of a pop-up image 70 for confirming whether or not the operating procedure 210 is appropriate. The pop-up image 70 includes a text 70T which shows a question "did the operating procedures match with each other?", a button 70A, and a button 70B. The user 1 confirms the animation, determines whether or not the flow of the shown operations matches with the actual operations of the user 1, and operates the button 70A in a case where the flow matches with the actual operations. On the other hand, in a case where the flow of the shown operations does not match with the actual operations of the user 1, the user 1 operates the button 70B.

In step S116, the CPU 12A determines whether or not it is determined that the operating procedure 210 matches with the operations performed on the image forming apparatus 10 by the user 1. Specifically, for example, in a case where an operation for the button 70A of the pop-up image 70 is received, the CPU 12A makes the determination affirmative (Y in step S116) and executes the processing of step S122. On the other hand, in a case where an operation for the button 70B of the pop-up image 70 is received, the CPU 12A makes the determination negative (N in step S116) and executes step S118. The operation on the button 70A or the operation on the button 70B performed by the user 1, in other words, the selection of either the button 70A or the button 70B by the user 1 is an example of the result of the selection of the user 1.

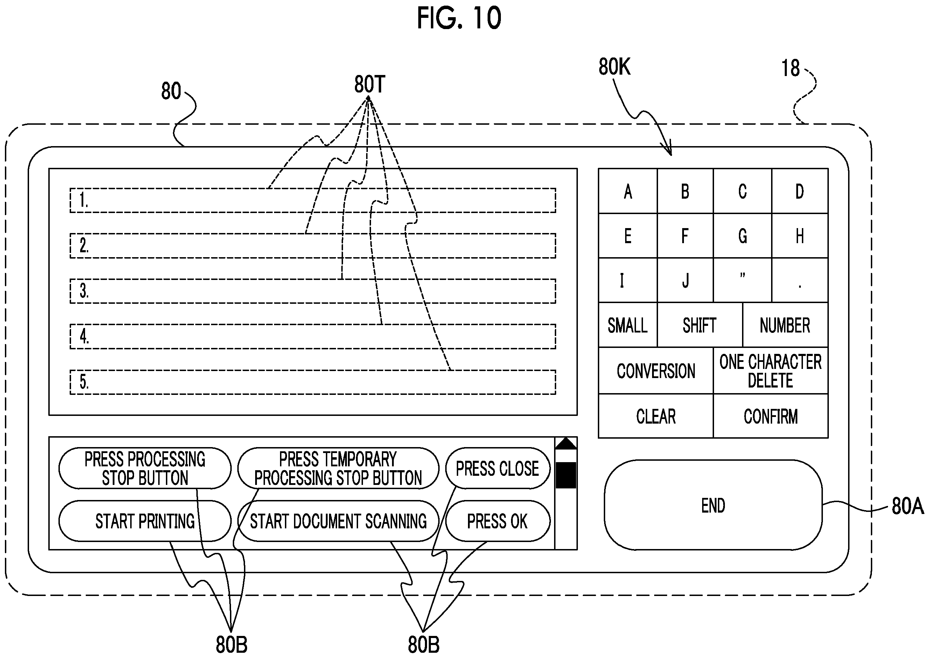

In step S118, the CPU 12A displays a reception screen for receiving the appropriate operating procedure 220 on the display unit 18. The appropriate operating procedure 220 is an operating procedure directly received from the user 1. The details of the reception screen for receiving the appropriate operating procedure 220 will be described with reference to Fig. 10.

Fig. 10 is a diagram showing an example of a reception screen 80 for receiving the appropriate operating procedure 220. The reception screen 80 includes, for example, a plurality of text input fields 80T, a keyboard 80K, a plurality of fixed processing buttons 80B, and an end button 80A. In a case where the reception screen 80 is displayed on the display unit 18, the user 1 is able to directly input the appropriate operating procedure performed on the image forming apparatus 10 into the text input fields 80T, or input the appropriate operating procedure by operating the keyboard 80K, pressing the fixed processing button 80B, or the like.

In step S120, the CPU 12A receives the flow of the operations input to the reception screen 80 as the appropriate operating procedure 220. For example, in a case where the user 1 operates the end button 80A included in the reception screen 80, the CPU 12A receives the appropriate operating procedure 210.

In step S122, the CPU 12A generates the analysis data 300. The analysis data 300 includes at least one of the appropriate operating procedure 220, the operational log data 202', the control log data 204' in the above-mentioned specified period in the control log data 204, the image formation log data 206' in the above-mentioned specified period in the image formation log data 206, or the answers to the questions.

More specifically, in a case where the determination in step S116 is affirmative, the CPU 12A acquires the control log data 204' and the image formation log data 206' from the storage unit 22, and generates analysis data 300 including the operational log data 202', the control log data 204', the image formation log data 206', and the answers to questions. As described above, in the present exemplary embodiment, the operational log data 202' is acquired in step S102, and then the control log data 204' and the image formation log data 206' are acquired in step S122.

In contrast, in a case where the determination in step S116 is negative, the CPU 12A acquires the control log data 204' and the image formation log data 206' from the storage unit 22, and generates analysis data 300 including the appropriate operating procedure 220, the operational log data 202', the control log data 204', the image formation log data 206', and the answers to questions.

In step S124, the CPU 12A outputs the analysis data 300 to an external device such as the PC 30. The PC 30 is an example of the external device, while another example is an external storage device, a PC used by the user 1, and the like. Further, the analysis data 300 may be output to a nonvolatile memory 12D, a storage unit 22, or the like which is provided inside the image forming apparatus 10.

In a case where the processing of step S124 ends, the CPU 12A ends the execution of the processing by the image forming program 100.

As described above, in the present exemplary embodiment, in a case where a trouble occurs in the image formation processing and an instruction is issued to acquire the operational log data about the operating procedure of the user who issues an instruction to perform the image formation processing, the operational log data is acquired and the operating procedure is displayed on the display unit 18, the user is made to select whether or not the operating procedure is appropriate, and the analysis data 300 according to the result of the selection of the user is output. Accordingly, in a case where a trouble occurs in the image formation processing, it is possible to efficiently analyze the trouble as compared with a case where the operational log data is output as the analysis data 300 without causing the user to confirm the operating procedure.

Although the exemplary embodiment has been described above, the technical scope of the present disclosure is not limited to the scope described in the above-mentioned exemplary embodiment. Various modifications or improvements can be made to the exemplary embodiment without departing from the scope of the claims.

In the embodiments above, the term "processor" refers to hardware in a broad sense. Examples of the processor include general processors (e.g., CPU: Central Processing Unit) and dedicated processors (e.g., GPU: Graphics Processing Unit, ASIC: Application Specific Integrated Circuit, FPGA: Field Programmable Gate Array, and programmable logic device).

In the embodiments above, the term "processor" is broad enough to encompass one processor or plural processors in collaboration which are located physically apart from each other but may work cooperatively. The order of operations of the processor is not limited to one described in the embodiments above, and may be changed.

In the present exemplary embodiment, the form, in which the image forming program 100 is installed in the storage unit 22, has been described, but the present invention is not limited thereto. The image forming program 100 according to the present exemplary embodiment may be provided in a form in which the program is recorded on a computer-readable storage medium. For example, the image forming program 100 according to the present exemplary embodiment may be provided in a form in which the program is recorded on an optical disk such as a compact disc (CD)-ROM and a digital versatile disc (DVD)-ROM, or a form in which the program is recorded on a semiconductor memory such as a universal serial bus (USB) memory or a memory card. Further, the image forming program 100 according to the present exemplary embodiment may be acquired from the external device via the communication unit 24.

Further, in the above-mentioned exemplary embodiment, a case where the processing in the image forming apparatus 10 is implemented by a software configuration by using a computer by executing a program has been described, but the present invention is not limited thereto. For example, the image formation processing may be implemented by a hardware configuration or a combination of a hardware configuration and a software configuration.

In addition, it is needless to say that the configuration of the image forming apparatus 10 described in the above-mentioned exemplary embodiment is an example and an unnecessary part may be deleted or a new part may be added within a range that does not deviate from the scope of the claims.

Further, it is needless to say that the flow of processing of the image forming program 100 described in the above-mentioned exemplary embodiment (refer to Fig. 4) is also an example, and unnecessary steps may be deleted, new steps may be added within a range that does not deviate from the scope of the claims, or the processing order may be changed.

Furthermore, it is needless to say that each image (refer to Figs. 6 to 10) which is output to the display unit 18 by the image forming program 100 described in the above-mentioned exemplary embodiment is also an example, and unnecessary elements may be deleted, new elements may be added, the arrangement of the elements in the image may be changed, and design change such as enlarging or reducing the elements may be performed within a range that does not deviate from the scope of the claims.

### Brief Description of the Reference Symbols

1: user
3: supporter
10: image forming apparatus
12: control unit
12A: CPU
16: image forming unit
18: display unit
22: storage unit
40: help button
80: reception screen
100: image forming program
200: log data
202: operational log data
202': operational log data
204: control log data
206: image formation log data
210: operating procedure
220: appropriate operating procedure
300: analysis data

## Claims

1. An image forming apparatus (10) comprising:
a processor (12A),
wherein the processor (12A) is configured to:
acquire operational log data (202) about an operating procedure (210) of a user (1) who issues an instruction by operating a help button (4) to perform image formation processing;
display the operating procedure (210), in a case where a trouble occurs in the image formation processing and an instruction is issued to acquire the operational log data (202);
wherein the processor is further configured to:
cause the user (1) to select whether or not the operating procedure (210) matches with the operations performed on the image forming apparatus (10) by the user (1) by displaying an animation showing a flow of the operations performed on the image forming apparatus (10) by the user (1);
determine whether or not it is determined that the operating procedure (210) matches with the operations performed on the image forming apparatus (10) by the user (1); and
output data (300) for trouble analysis according to a result of the selection of the user (1) wherein the processor (12A) is configured to:
receive the appropriate operating procedure (220) selected by the user (1) in a case where the selection of the user is that the operating procedure (210) does not match with the operations performed on the image forming apparatus (10) by the user (1); and
output the data (300) for the trouble analysis including the received appropriate operating procedure (220) and the operational log data.

2. The image forming apparatus (10) according to claim 1, wherein the processor (12A) is configured to:
output the data (300) for the trouble analysis including the operational log data (202) in a case where the selection of the user (1) is that the operating procedure (210) matches with the operations performed on the image forming apparatus (10) by the user (1).

3. The image forming apparatus (10) according to any one of claims 1 to 2, wherein the processor (12A) is configured to:
acquire the operational log data (202) including the operating procedure (210) performed in a specified period including at least a period from the occurrence of the trouble to the instruction to acquire the operational log data (202).

4. The image forming apparatus (10) according to any one of claims 1 to 3, wherein the processor (12A) is configured to:
display a question for the trouble analysis;
receive an answer to the question; and
output the question and the received answer which are included in the data (300) for the trouble analysis.

5. The image forming apparatus (10) according to claim 4,
wherein the question is a question about an operation performed by the user (1) in a period before and after a time point at which the trouble occurs.

6. The image forming apparatus (10) according to any one of claims 1 to 5,
wherein the data (300) for the trouble analysis includes image formation log data (206) about the image formation processing and control log data (204) about control of the image forming apparatus (10).

7. The image forming apparatus (10) according to claim 6, wherein the processor (12A) is configured to:
acquire the image formation log data (206) about the image formation processing performed in a specified period including at least a period from the occurrence of the trouble to the instruction to acquire the operational log data (202), and the control log data (204) about the control of the processor (12A) performed in the specified period.

8. The image forming apparatus (10) according to claim 7, wherein the processor (12A) is configured to:
acquire the image formation log data (206) and the control log data (204) after acquiring the operational log data (202).

9. A computer program comprising instructions which when executed by an image forming apparatus according to claim 1 cause said image forming apparatus to execute the method of claim 10.

10. An image forming method comprising:
acquiring operational log data (202) about an operating procedure (210) of a user (1) who issues an instruction by operating a help button (4) to perform image formation processing.
displaying the operating procedure (210), in a case where a trouble occurs in the image formation processing and an instruction is issued to acquire the operational log data (202);
the image forming method being **characterized in that** the method further comprises:
causing the user (1) to select whether or not the operating procedure (210) matches with the operations of image formation processing performed by the user (1); determining whether or not it is determined that the operating procedure (210) matches with the operations of image formation processing performed by the user (1) by displaying an animation showing a flow of the operations performed on the image forming apparatus (10) by the user (1) and
outputting data (300) for trouble analysis according to a result of the selection of the user (1) wherein the method further comprises :
receiving the appropriate operating procedure (220) selected by the user (1) in a case where the selection of the user is that the operating procedure (210) does not match with the operations performed on the image forming apparatus (10) by the user (1); and
outputting the data (300) for the trouble analysis including the received appropriate operating procedure (220) and the operational log data.

## Patentansprüche

1. Bilderzeugungsvorrichtung (10), umfassend:
einen Prozessor (12A),
wobei der Prozessor (12A) so konfiguriert ist, dass er:
Bedienungsprotokolldaten (202) über einen Bedienablauf (210) eines Benutzers (1), der eine Anweisung erteilt, indem er eine Hilfetaste (4) betätigt, um Bilderzeugungsverarbeitung durchzuführen, erfasst;
den Bedienablauf (210) in einem Fall anzeigt, in dem ein Fehler bei der Bilderzeugungsverarbeitung auftritt und eine Anweisung zum Erfassen der Bedienungsprotokolldaten (202) ausgegeben wird;
wobei der Prozessor ferner so konfiguriert ist, dass er:
den Benutzer (1) veranlasst, durch Anzeigen einer Animation, die einen Ablauf der von dem Benutzer (1) an der Bilderzeugungsvorrichtung (10) durchgeführten Bedienungen zeigt, auszuwählen, ob der Bedienablauf (210) mit den von dem Benutzer (1) an der Bilderzeugungsvorrichtung (10) durchgeführten Bedienungen übereinstimmt oder nicht;
bestimmt, ob es bestimmt ist, dass der Bedienablauf (210) mit den von dem Benutzer (1) an der Bilderzeugungsvorrichtung (10) durchgeführten Bedienungen übereinstimmt oder nicht; und
Daten (300) für Fehleranalyse gemäß einem Ergebnis der Auswahl des Benutzers (1) ausgibt, wobei der Prozessor (12A) so konfiguriert ist, dass er:
den geeigneten Bedienablauf (220), der von dem Benutzer (1) ausgewählt wurde, in einem Fall, in dem die Auswahl des Benutzers so ist, dass der Bedienablauf (210) nicht mit den von dem Benutzer (1) an der Bilderzeugungsvorrichtung (10) durchgeführten Bedienungen übereinstimmt, empfängt; und
die Daten (300) für die Fehleranalyse, einschließlich des empfangenen geeigneten Bedienablaufs (220) und der Bedienungsprotokolldaten, ausgibt.

2. Bilderzeugungsvorrichtung (10) nach Anspruch 1, wobei der Prozessor (12A) so konfiguriert ist, dass er:
die Daten (300) für die Fehleranalyse, einschließlich der Bedienungsprotokolldaten (202), in einem Fall, in dem die Auswahl des Benutzers (1) so ist, dass der Bedienablauf (210) mit den von dem Benutzer (1) an der Bilderzeugungsvorrichtung (10) durchgeführten Bedienungen übereinstimmt, ausgibt.

3. Bilderzeugungsvorrichtung (10) nach einem der Ansprüche 1 bis 2, wobei der Prozessor (12A) so konfiguriert ist, dass er:
die Bedienungsprotokolldaten (202) erfasst, die den Bedienablauf (210), der in einem spezifizierten Zeitraum, der mindestens einen Zeitraum, der von dem Auftreten des Fehlers bis zu der Anweisung zum Erfassen der Bedienungsprotokolldaten (202) enthält, durchgeführt wurde, enthalten.

4. Bilderzeugungsvorrichtung (10) nach einem der Ansprüche 1 bis 3, wobei der Prozessor (12A) so konfiguriert ist, dass er:
eine Frage für die Fehleranalyse anzeigt;
eine Antwort auf die Frage empfängt; und
die Frage und die empfangene Antwort, die in den Daten (300) für die Fehleranalyse enthalten sind, ausgibt.

5. Bilderzeugungsvorrichtung (10) nach Anspruch 4,
wobei die Frage eine Frage zu einem Vorgang ist, der von dem Benutzer (1) in einem Zeitraum vor und nach einem Zeitpunkt, zu dem der Fehler auftritt, durchgeführt wurde.

6. Bilderzeugungsvorrichtung (10) nach einem der Ansprüche 1 bis 5,
wobei die Daten (300) für die Fehleranalyse Bilderzeugungs-Protokolldaten (206) über die Bilderzeugungsverarbeitung und Steuerprotokolldaten (204) über Steuerung der Bilderzeugungsvorrichtung (10) enthalten.

7. Bilderzeugungsvorrichtung (10) nach Anspruch 6, wobei der Prozessor (12A) so konfiguriert ist, dass er:
die Bilderzeugungs-Protokolldaten (206) über die Bilderzeugungsverarbeitung, die in einem spezifizierten Zeitraum, der mindestens ein Zeitraum von dem Auftreten des Fehlers bis zu der Anweisung zum Erfassen der Bedienungsprotokolldaten (202) enthält, durchgeführt wurde, und die Steuerprotokolldaten (204) über die Steuerung des Prozessors (12A), die in dem spezifizierten Zeitraum durchgeführt wurde, erfasst.

8. Bilderzeugungsvorrichtung (10) nach Anspruch 7, wobei der Prozessor (12A) so konfiguriert ist, dass er:
die Bilderzeugungs-Protokolldaten (206) und die Steuerprotokolldaten (204) nach Erfassen der Bedienungsprotokolldaten (202) erfasst.

9. Computerprogramm, umfassend Anweisungen, die, wenn sie von einer Bilderzeugungsvorrichtung nach Anspruch 1 ausgeführt werden, die Bilderzeugungsvorrichtung veranlassen, das Verfahren nach Anspruch 10 auszuführen.

10. Bilderzeugungsverfahren, umfassend:
Erfassen von Bedienungsprotokolldaten (202) über einen Bedienablauf (210) eines Benutzers (1), der eine Anweisung erteilt, indem er eine Hilfetaste (4) betätigt, um Bilderzeugungsverarbeitung durchzuführen;
Anzeigen des Bedienablaufs (210), in einem Fall, in dem ein Fehler bei der Bilderzeugungsverarbeitung auftritt und eine Anweisung zum Erfassen der Bedienungsprotokolldaten (202) erteilt wird;
wobei das Bilderzeugungsverfahren **dadurch gekennzeichnet ist, dass** das Verfahren ferner umfasst:
Veranlassen, dass der Benutzer (1) auswählt, ob der Bedienablauf (210) mit den von dem Benutzer (1) durchgeführten Bedienungen von Bilderzeugungsverarbeitung übereinstimmt oder nicht;
Bestimmen, durch Anzeigen einer Animation, die einen Ablauf der von dem Benutzer (1) an der Bilderzeugungsvorrichtung (10) durchgeführten Bedienungen zeigt, ob es bestimmt ist, dass der Bedienablauf (210) mit den von dem Benutzer (1) durchgeführten Bedienungen von Bilderzeugungsverarbeitung übereinstimmt oder nicht; und
Ausgeben von Daten (300) für Fehleranalyse gemäß einem Ergebnis der Auswahl des Benutzers (1), wobei das Verfahren ferner umfasst:
Empfangen des geeigneten Bedienablaufs (220), der von dem Benutzer (1) in einem Fall, in dem die Auswahl des Benutzers so ist, dass der Bedienablauf (210) nicht mit den von dem Benutzer (1) an der Bilderzeugungsvorrichtung (10) durchgeführten Bedienungen übereinstimmt, ausgewählt wird; und
Ausgeben der Daten (300) für die Fehleranalyse, die den empfangenen geeigneten Bedienablauf (220) und die Bedienungsprotokolldaten enthalten.

## Revendications

1. Appareil de formation d'images (10) comprenant :
un processeur (12A),
dans lequel le processeur (12A) est configuré pour :
acquérir des données de journal opérationnel (202) concernant une procédure d'opération (210) d'un utilisateur (1) qui émet une instruction en actionnant un bouton d'aide (4) pour effectuer un traitement de formation d'images ;
afficher la procédure d'opération (210), dans un cas où un problème survient dans le traitement de formation d'images et une instruction est émise pour acquérir les données de journal opérationnel (202) ;
dans lequel le processeur est en outre configuré pour :
amener l'utilisateur (1) à sélectionner si oui ou non la procédure d'opération (210) correspond aux opérations effectuées sur l'appareil de formation d'images (10) par l'utilisateur (1) en affichant une animation montrant un flux des opérations effectuées sur l'appareil de formation d'images (10) par l'utilisateur (1) ;
déterminer si oui ou non il est déterminé que la procédure d'opération (210) correspond aux opérations effectuées sur l'appareil de formation d'images (10) par l'utilisateur (1) ; et
sortir des données (300) pour une analyse de problèmes en fonction d'un résultat de la sélection de l'utilisateur (1), dans lequel le processeur (12A) est configuré pour :
recevoir la procédure d'opération appropriée (220) sélectionnée par l'utilisateur (1) dans un cas où la sélection de l'utilisateur est que la procédure d'opération (210) ne correspond pas aux opérations effectuées sur l'appareil de formation d'images (10) par l'utilisateur (1) ; et
sortir les données (300) pour l'analyse de problèmes incluant la procédure d'opération appropriée reçue (220) et les données de journal opérationnel.

2. Appareil de formation d'images (10) selon la revendication 1, dans lequel le processeur (12A) est configuré pour :
sortir les données (300) pour l'analyse de problèmes incluant les données de journal opérationnel (202) dans un cas où la sélection de l'utilisateur (1) est que la procédure d'opération (210) correspond aux opérations effectuées sur l'appareil de formation d'images (10) par l'utilisateur (1).

3. Appareil de formation d'images (10) selon l'une quelconque des revendications 1 à 2, dans lequel le processeur (12A) est configuré pour :
acquérir les données de journal opérationnel (202) incluant la procédure d'opération (210) effectuée dans une période spécifiée incluant au moins une période allant de la survenance du problème à l'instruction d'acquérir les données de journal opérationnel (202).

4. Appareil de formation d'images (10) selon l'une quelconque des revendications 1 à 3, dans lequel le processeur (12A) est configuré pour :
afficher une question pour l'analyse de problèmes ;
recevoir une réponse à la question ; et
sortir la question et la réponse reçue qui sont incluses dans les données (300) pour l'analyse de problèmes.

5. Appareil de formation d'images (10) selon la revendication 4,
dans lequel la question est une question sur une opération effectuée par l'utilisateur (1) dans une période avant et après un point dans le temps où le problème survient.

6. Appareil de formation d'images (10) selon l'une quelconque des revendications 1 à 5, dans lequel les données (300) pour l'analyse de problèmes incluent des données de journal de formation d'images (206) concernant le traitement de formation d'images et des données de journal de contrôle (204) concernant le contrôle de l'appareil de formation d'images (10).

7. Appareil de formation d'images (10) selon la revendication 6, dans lequel le processeur (12A) est configuré pour :
acquérir les données de journal de formation d'images (206) concernant le traitement de formation d'images effectué dans une période spécifiée incluant au moins une période allant de la survenance du problème à l'instruction d'acquérir les données de journal opérationnel (202), et les données de journal de contrôle (204) concernant le contrôle du processeur (12A) effectué dans la période spécifiée.

8. Appareil de formation d'images (10) selon la revendication 7, dans lequel le processeur (12A) est configuré pour :
acquérir les données de journal de formation d'images (206) et les données de journal de contrôle (204) après avoir acquis les données de journal opérationnel (202).

9. Programme informatique comprenant des instructions qui, lorsqu'elles sont exécutées par un appareil de formation d'images selon la revendication 1, amènent ledit appareil de formation d'images à exécuter le procédé de la revendication 10.

10. Procédé de formation d'images comprenant :
acquérir des données de journal opérationnel (202) concernant une procédure d'opération (210) d'un utilisateur (1) qui émet une instruction en actionnant un bouton d'aide (4) pour effectuer un traitement de formation d'images ;
afficher la procédure d'opération (210), dans un cas où un problème survient dans le traitement de formation d'images et une instruction est émise pour acquérir les données de journal opérationnel (202) ;
le procédé de formation d'images étant **caractérisé en ce que** le procédé comprend en outre :
amener l'utilisateur (1) à sélectionner si oui ou non la procédure d'opération (210) correspond aux opérations de traitement de formation d'images effectuées par l'utilisateur (1) ;
déterminer si oui ou non il est déterminé que la procédure d'opération (210) correspond aux opérations de traitement de formation d'images effectuées par l'utilisateur (1) en affichant une animation montrant un flux des opérations effectuées sur l'appareil de formation d'images (10) par l'utilisateur (1) ; et
sortir des données (300) pour une analyse de problèmes en fonction d'un résultat de la sélection de l'utilisateur (1) dans lequel le procédé comprend en outre :
recevoir la procédure d'opération appropriée (220) sélectionnée par l'utilisateur (1) dans un cas où la sélection de l'utilisateur est que la procédure d'opération (210) ne correspond pas aux opérations effectuées sur l'appareil de formation d'images (10) par l'utilisateur (1) ; et
sortir les données (300) pour l'analyse de problèmes incluant la procédure d'opération appropriée reçue (220) et les données de journal opérationnel.
